# EUROPEAN PATENT SPECIFICATION

(11) **EP 1 630 081 B1**
(45) Date of publication and mention of the grant of the patent: **15.10.2008**
(21) Application number: 05009619.7
(22) Date of filing: 02.05.2005
(51) Int. Cl.: B62D 61/08, B62K 5/04

(54) **Tiltable three-wheeled vehicle**
Neigbares Dreiradfahrzeug
Véhicule inclinable à trois roues

(30) Priority: 27.08.2004 JP 2004249102
(43) Date of publication of application: 01.03.2006
(73) Proprietor: HONDA MOTOR CO., LTD., Tokyo (JP)
(72) Inventor: Sugioka, Koichi, Wako-shi Saitama (JP); Takahashi, Hirohisa, Wako-shi Saitama (JP); Hayashi, Akira, Wako-shi Saitama (JP); Yagisawa, Katsuichi, Wako-shi Saitama (JP)
(74) Representative: Trossin, Hans-Jürgen

(56) References cited:
- EP-A- 1 180 476
- JP-A- 51 072 034
- US-A- 2 493 817
- US-A- 3 746 118
- US-A- 5 630 774
- US-A1- 2002 063 405
- US-A1- 2003 102 176

## Description

The present invention relates to a tiltable three-wheeled vehicle according to the preamble of claim 1 which can perform a turning operation using a camber (an inclination of a wheel as viewed from a front side of the wheel) of a rear wheel and the steering of a front wheel.

A tiltable three-wheeled vehicle of the generic kind according to the preamble of claim 1 is known from document US-A-2,493,817. This document discloses a tiltable three-wheeled vehicle, wherein the rear wheel is tiltable via two ball joints provided on the frame.

In the following, further reference to prior art is made:

Conventionally, there has also been known a tiltable three-wheeled vehicle which performs a turning operation by inclining wheels by making use of a camber of the wheels (for example, see US-A-1505224).

Fig. 1 of the US-A-1505224 is a perspective view of a tiltable vehicle, wherein the tiltable vehicle 12 (symbol used in the publication being used without modification, other parts being indicated in the same manner hereinafter) is a three-wheeled vehicle which raises side links 90, 92 from left and right trailing arms 56, 58 which extend in the fore-and-aft direction and includes a front wheel 34 which is mounted on a frame 14 by way of a bell crank 94 and a knob 108 and rear wheels 72, 74. A rider imparts a camber to the wheels 34, 72, 74 by changing loads which are applied to left and right step-on pads 76, 78 whereby the vehicle 12 is turned.

However, since an engine 36 which constitutes power means is mounted on the front wheel 34 which constitutes a steering portion, an inertia mass of the steering portion is increased. Further, there has been a demand for the enhancement of the turning performance at a fixed speed or more along with a demand that a steering wheel is one wheel having a small diameter.

It is a task of the present invention to provide a tiltable three-wheeled vehicle which exhibits an excellent turning performance and becomes self-standing in accordance with a rider's intention. This tiltable three-wheeled vehicle should have a simple structure and a large range of tilting motion so that a small turning radius can be achieved.

This task is solved by a tiltable three-wheeled vehicle according to claim 1.

An embodiment of a tiltable three-wheeled vehicle according to the present invention includes left and right front wheels and one rear wheel, and further includes a tilting mechanism between the rear wheel and the front wheels, wherein on a center frame which extends in the fore-and-aft direction of the vehicle, a rotary member is mounted in a state that the rotary member is rotatable about an axis of the center frame, a floor plate which allows the riding of a rider and a cross shaft which crosses the center frame at a right angle are fixed to the rotary member, the left and right front wheels are mounted on left and right ends of the cross shaft, one rear wheel is mounted on a rear portion of the center frame by way of a power unit, a manipulating member which the rider manipulates is erected on a front portion of the center frame, the front wheel maintains a zero camber, and the center frame and the rear wheel constitute a tiltable portion with respect to the front wheels and the floor plate by way of the rotary member.

This embodiment can further be improved by the constitution that the left and right front wheels are steerably mounted on the cross shaft, tie rods extend in the left-and-right direction from a front portion of the center frame or a lower portion of the manipulating member, and the tie rods are connected with the left and right front wheels, whereby two front wheels are configured to be steered when the manipulating member is inclined to the left or to the right.

According to the above-described embodiment, the manipulating member is fixed to the front portion of the center frame and one rear wheel is mounted on the rear portion of the center frame by way of the power unit and hence, the rear wheel is tilted by an amount that the manipulating member is inclined. Accordingly, when the manipulating member is erected upright, a camber of one rear wheel becomes zero. On the other hand, since cambers of the left and right front wheels maintain zero, it is possible to obtain an advantageous effect that a vehicle body can be made self-standing in accordance with a driver's intension even when the vehicle is stopped.

Further, one rear wheel is configured to be tilted in the turning direction by tilting the manipulating member in either a left side or a right side, it is possible to obtain an advantageous effect that the vehicle exhibits the favorable turning performance and hence, a ride can enjoy a light-hearted and joyful traveling.

According to the above-described improvement, the vehicle is configured such that the tie rods are extended toward the left and right front wheels from the manipulating member and are connected to the left and right front wheels and hence, when the manipulating member is tilted in either the left side or the right side, the left and right front wheels are steered.

Since the vehicle is configured such that the left and right front wheels can be steered and one rear wheel can be tilted in the turning direction, it is possible to direct all three wheels in the turning direction.

As a result, it is possible to obtain an advantageous effect that the turning performance is further enhanced.
Fig. 1 is a
   perspective view of a tiltable three-wheeled vehicle according to the present invention.
Fig. 2 is a
   side view of the tiltable three-wheeled vehicle according to the present invention.
Fig. 3 is a
   view as viewed from the direction of an arrow 3 in Fig. 2.
Fig. 4 is a
   cross-sectional view taken along a line 4-4 in Fig. 2.
Fig. 5 is a
   cross-sectional view taken along a line 5-5 in Fig. 2.
Fig. 6 is an
   operational view of the tiltable three-wheeled vehicle when the rear wheel is tilted.
Fig. 7 is a
   cross-sectional view taken along a line 7-7 in Fig. 2.
Fig. 8 is a
   cross-sectional view taken along a line 8-8 in Fig. 3.
Fig. 9 is an
   operational view showing a state in which front wheels are steered when a frame is tilted.
Fig. 10 is an
   operational view of a tiltable three-wheeled vehicle.
Fig. 11 is an
   operational view for explaining that a tiltable three-wheeled vehicle can be self-standing on an inclined surface.
Fig. 12 is a
   view showing another embodiment of Fig. 2.
Fig. 13 is a:
   view showing another embodiment of Fig. 3.
Fig. 14 is a
   view showing still another example of a tiltable vehicle.
Fig. 15 is an
   operational view for explaining a mode in which a vehicle body is inclined based on a bank control of a vehicle body.

The best mode for carrying out the present invention is explained hereinafter based on attached drawings. Here, the drawings are viewed in the direction of symbols. Further, "front", "rear", "left", "right", "up", "down" indicate directions as viewed from a rider.

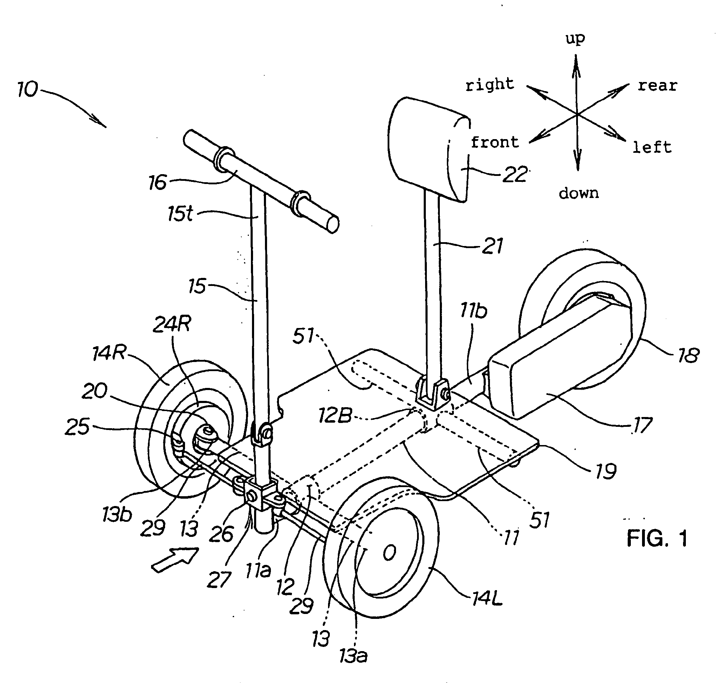

Fig. 1 is a perspective view of a tiltable three-wheeled vehicle according to the present invention. The tiltable three-wheeled vehicle 10 includes a center frame 11 which extends from a front side to a rear side of a vehicle body, cross shafts 13, 13 which extend in left and right sides by way of a rotary member 12 which is fitted on a front portion 11a of the center frame 11, and left and right front wheels 14L, 14R which are rotatably mounted on left and right ends 13a, 13b of the cross shafts 13, 13. Further, the tiltable three-wheeled vehicle 10 includes a manipulating member 15 which is steerably mounted on a front portion 11a of the center frame 11 in a state that the manipulating member 15 extends upwardly and a handle 16 which is mounted on an upper end 15t of the manipulating member 15 in a state that the handle 16 extends in the left and right sides.

The tiltable three-wheeled vehicle is also a vehicle which includes a power unit 17 which is mounted on a rear portion 11b of the center frame 11, a rear wheel 18 which is mounted on the power unit 17 and is driven by the power of the power unit 17, and a floor plate 19 which is arranged between the front wheels 14L, 14R and the rear wheel 18 and on which a rider rides.

Hub drums 24R (the hub drum on a left side not shown in the drawing) are mounted on the left and right ends 13a, 13b of the cross shafts 13 by way of steering pins 20 (the steering pin on a left side not shown in the drawing).

Here, numeral 21 indicates a rider support bar which supports the rider and numeral 22 indicates a back rest which supports a posture of the rider.

The vehicle is configured such that the left and right front wheels 14L, 14R and the floor plate 19 constitute a non-tilting portion which exhibits a camber of zero during turning and, at the same time, the rear wheel 18 is steered by tilting the manipulating member 15 in either left or right direction from an upright position. Here, cross shafts 51, 51 are provided to a rear portion of the floor plate 19.

That is, in the tiltable three-wheeled vehicle 10 of the present invention, the rotary member 12 which is rotatable about an axis of the center frame 11 is formed on the center frame 11 which extends in the fore-and-aft direction of the vehicle, the floor plate 19 which allows a rider to ride thereon and the cross shafts 13, 13 which cross the center frame 11 at a right angle are fixed to the rotary member 12, the left and right front wheels 14L, 14R are mounted on left and right ends 13a, 13b of the cross shafts 13, 13, one rear wheel 18 is mounted on the rear portion 11b of the center frame 11 by way of the power unit 17, the manipulating member 15 which a driver manipulates is erected on the front portion 11a of the center frame 11, the front wheels 14L, 14R maintain a zero camber, and the center frame 11 and the rear wheel 18 constitute a tilting portion with respect to the front wheels 14L, 14R and the floor plate 19 by way of the rotary member 12.

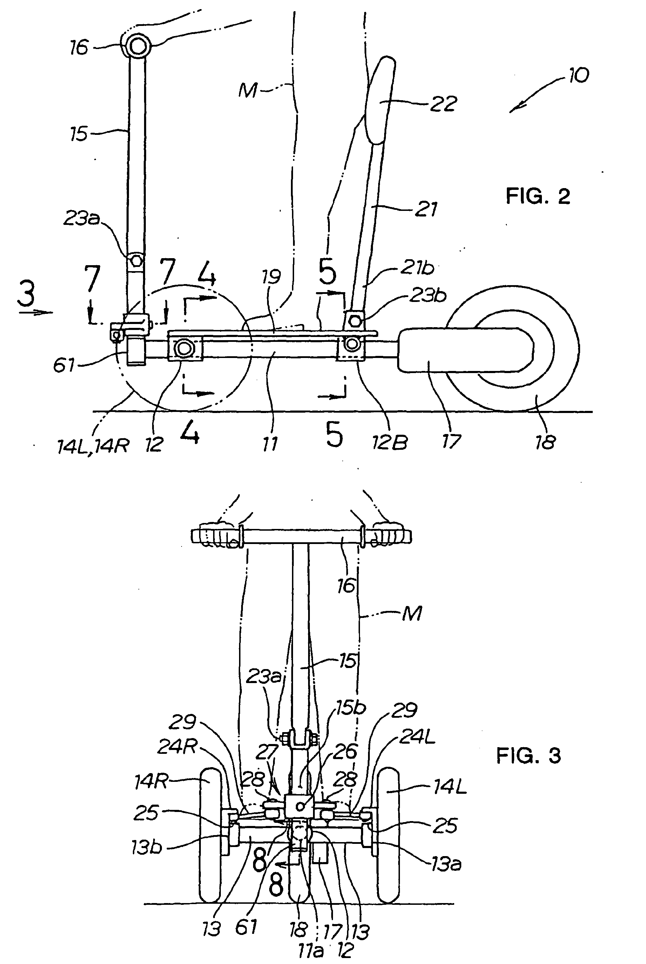

Fig. 2 is a side view of the tiltable three-wheeled vehicle according to the present invention. The drawing shows that front and rear rotary members 12, 12B are fitted on the center frame 11, the front and rear cross shafts 13, 13 ... (... meaning plurals), 51 ... extend in the front/rear direction in the drawing of these rotary members 12, 12B, and these cross shafts 13..., 51... and the rotary members 12, 12B are mounted on the floor plate 19. Here, M indicates a driver.

The manipulating member 15 has the collapsible structure and constitutes a member which is foldable at a position of a fixing shaft 23a formed on a midst portion of the manipulating member 15. In the same manner, a driver support bar 21 also has the foldable structure and constitutes a member which is foldable at a position of a fixing shaft 23b formed on a lower end portion 21b of the driver support lever 21.

By folding the manipulating member 15 and the driver support lever 21 or by adopting the dividable structure by forming the fixing shafts 23a, 23b using bolts or the like and removing these fixing shafts 23a, 23b, it is possible to make the tiltable three-wheeled vehicle 10 more compact whereby the tiltable three-wheeled vehicle is suitable also for mounting in an automobile or the like.

Fig. 3 is a view as viewed from an arrow 3 in Fig. 2 and shows the structure of the front wheels 14L, 14R and a periphery of cross shaft 13.

Hub drums 24L, 24R are mounted on left and right ends of the cross shaft 13 and the front wheels 14L, 14R are rotatably mounted on the hub drums 24L, 24R.

Next, the manipulating member 15 is mounted above the front portion 11a of the center frame 11, a rotary shaft 26 and a bracket 27 are mounted on a lower portion 15b of the manipulating member 15, tie rods 29, 29 are mounted on the bracket 27 by way of connecting members 28, 28, and the tie rods 29, 29 are mounted on the hub drums 24L, 24R by way of connecting pins 25, 25 thus constituting a steering system around the front wheels 14L, 14R. Here, the mounting structure of the bracket 27 on the manipulating member 15 is described later.

That is, the vehicle is configured such that the left and right front wheels 14L, 14R are rotatably and steerably mounted on the cross shafts 13, 13, the tie rods 29, 29 extend to the left side and the right side from the center-frame front portion 11a or the manipulating-member lower portion 15b, these tie rods 29, 29 are connected to the left and right front wheels 14L, 14R, whereby two front wheels 14L, 14R are rotatably steered when the manipulating member 15 is tilted to the left side or the right side.

Here, in this embodiment, the manipulating member 15 is rotatably mounted on the center frame 11 and the front wheels 14L, 14R can be steered by imparting a steering angle to the handle 16.

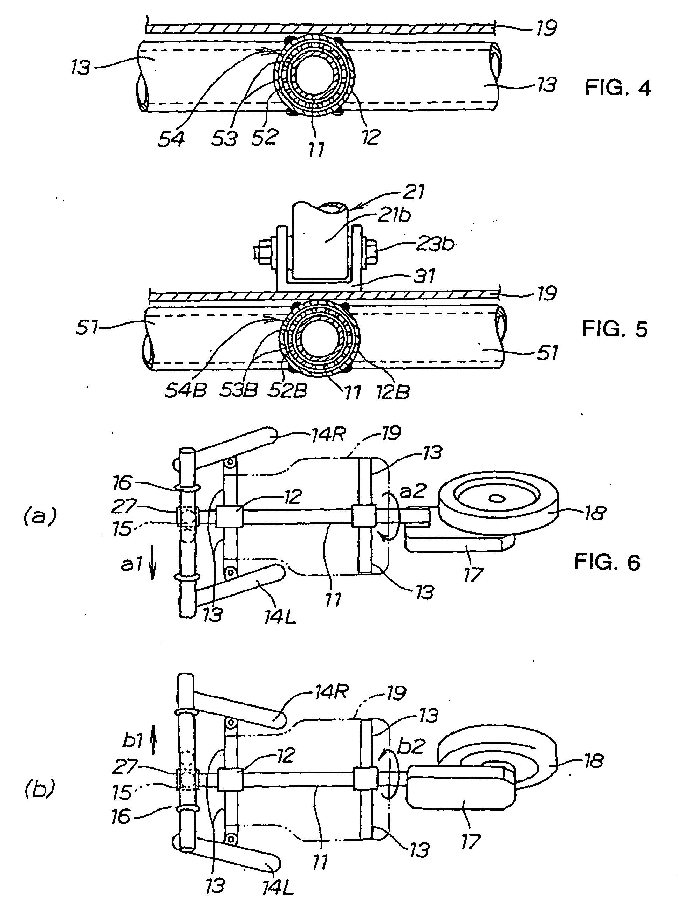

Fig. 4 is a cross-sectional view taken along a line 4-4 in Fig. 2 and is a view for explaining the structure around the front cross shaft.

The rotary member 12 is fitted on the center frame 11 and the cross shafts 13, 13 are fixed to left and right portions of the rotary member 12. Further, a bearing member 54 is interposed between the center frame 11 and the rotary member 12. The bearing member 54 is a member which is constituted of balls 52... and retainer members 53....

Here, the cross shafts 13, 13 are members for mounting the front wheels.

By adopting the pipe structure, the cross shafts 13, 13 are light-weighted. Further, although the joining of the respective members is performed by welding, provided that given strength and durability are satisfied, the joining using an adhesive agent may be applicable depending on portions.

Here, the floor plate 19 is arranged above the rotary member 12.

Fig. 5 is a cross-sectional view taken along a line 5-5 in Fig. 2 and is a view for explaining the structure around the rear cross shaft.

The rotary member 12B is fitted on the center frame 11 and the cross shafts 51, 51 are fixed to left and right portions of the rotary member 12B. Further, a bearing member 54B is interposed between the center frame 11 and the rotary member 12B. The bearing member 54B is a member which is constituted of balls 52B... and retainer members 53B....

The rear cross shafts 51, 51 are members which have a role of supporting the floor plate 19. Numeral 31 indicates a bracket which is provided for mounting the driver support bar 21 in a collapsible manner.

Fig. 6 is an operation view when the rear wheel is inclined.
(a) is a view for explaining the manipulation for inclining the rear wheel 18 to the left side to perform the left turning, wherein when the handle 16 is moved in the direction of an arrow a1 in the drawings, the center frame 11 is rotated in the direction of an arrow a2 in the drawing by way of the manipulating member 15 and, at the same time, the rear wheel 18 which is mounted on the center frame 11 is tilted to the left side whereby the left turning can be performed.
(b) is a view for explaining the manipulation for inclining the rear wheel 18 to the right side to perform the right turning, wherein when the handle 16 is moved in the direction of an arrow b1 in the drawings, the center frame 11 is rotated in the direction of an arrow b2 in the drawing by way of the manipulating member 15 and, at the same time, the rear wheel 18 which is mounted on the center frame 11 is tilted to the right side whereby the right turning can be performed.

Since it is possible to allow one rear wheel 18 to tilt in the turning direction by tilting the manipulating member 15 to either of left side and the right side, the vehicle exhibits the favorable turning performance and the rider can enjoy the light-hearted and joyful traveling.

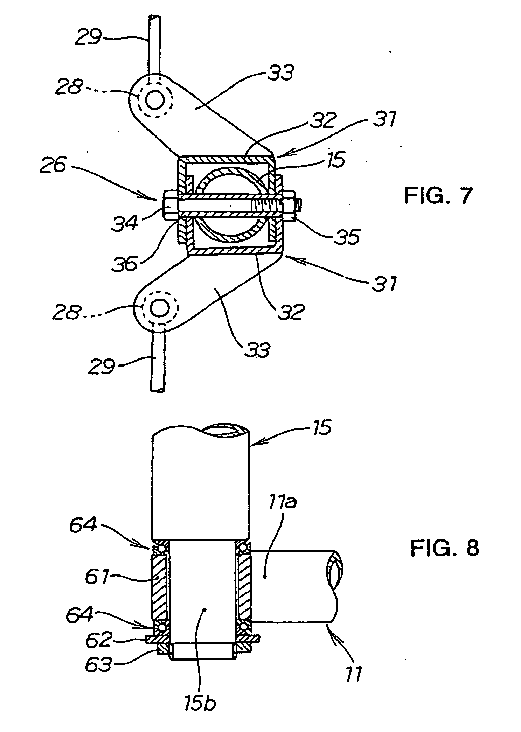

Fig. 7 is a cross sectional view taken along a line 7-7 in Fig. 2 and is a view for explaining the structure of the steering portion.

On the manipulating member 15, brackets 31, 31 each of which has a mounting portion 32 having a U-shaped cross section and a flange portion 33 are mounted.

These brackets 31, 31 are rotatably mounted with respect to the manipulating member 15 using the rotary shaft 26. The rotary shaft 26 is a member which is constituted of a penetration bolt 34, a collar 36 and a nut 35. Here, the collar 36 is fitted on a shaft of the penetration bolt 34, the brackets 31, 31 are arranged to face each other in an opposed manner to surround the manipulating member 15, the manipulation bolt 34 and the collar 36 are allowed to penetrate the manipulating member 15, and the brackets 31, 31 are mounted by a nut 35.

On the left and right flange portion 33, 33, the tie rods 29, 29 which are provided as members for transmitting a force for steering the front wheels by way of the connecting members 28, 28 are mounted.

Fig. 8 is a cross-sectional view taken along a line 8-8 in Fig. 3. The drawing shows that a head pipe 61 which is allowed to be rotatable with respect to the center frame 11 by the manipulating member 15 is interposed between a lower portion 15b of the manipulating member and a front portion 11a of the center frame and the head pipe 61 is fixed to the front portion 11a of the center frame.

To be more specific, the head pipe 61 is fixed to the front portion 11a of the center frame, the lower portion 15b of the manipulating member is inserted into the head pipe 61 and the manipulating member 15 is fixed rotatably with respect to the head pipe 61 using the nut 62 and a lock nut 63. To ensure the smooth rotation of the manipulating member 15 with respect to the head pipe 61, bearings 64, 64 are arranged above and below the head pipe 61.

In this manner, by rotatably mounting the manipulating member 15 with respect to the center frame 11, it is possible to impart a steering angle to the handle 16 whereby the front wheels 14L, 14R (see Fig. 3) can be steered.

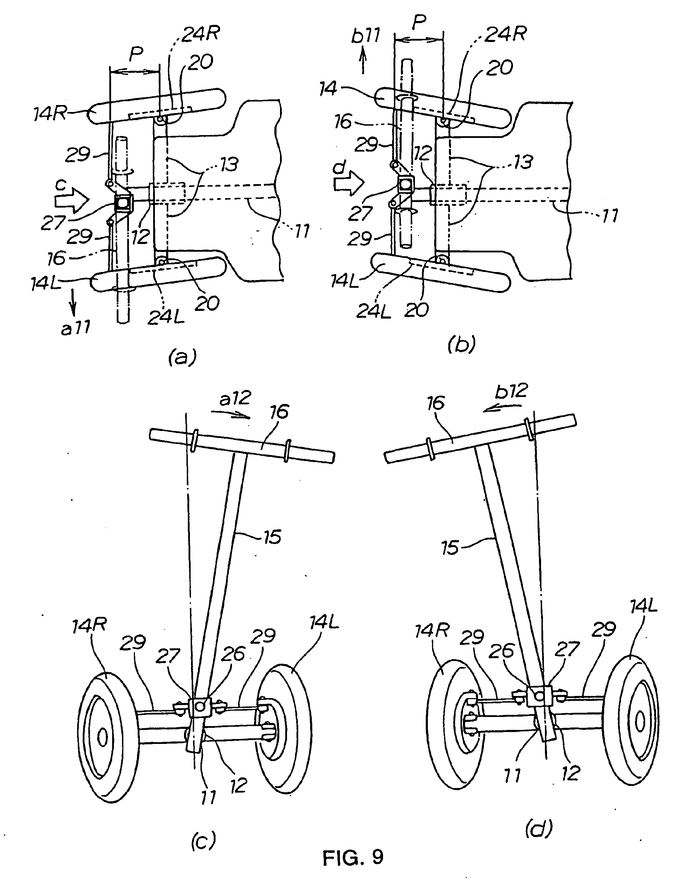

Fig. 9 is an operation view showing states in which the front wheels are steered when the frame is tilted.
(a) shows a state in which the front wheels are steered to the left side due to the tilting of the frame, and (b) shows a state in which the front wheels are steered to the right side due to the tilting of the frame.

Further, (c) is a view as viewed from an arrow c in (a) and (d) is a view as viewed from an arrow d in (b).

In (a), when the handle 16 is moved in the direction of an arrow all in the drawing, in (c), the center frame 11 is rotated in the direction of an arrow a12 in the drawing about the rotary member 12 and, at the same time, the manipulating member 15 which is integrally formed with the center frame 11 is tilted in the direction a12 and a force which pushes and pulls the front wheels 14L, 14R is added to the front wheels 14L, 14R through the tie rods 29, 29 mounted on a bracket 31 and hence, the front wheels 14L, 14R are tilted to the left side.

In (b), when the handle 16 is moved in the direction of an arrow b11 in the drawing, the front wheels 14L, 14R are steered to the right side.

To be more specific, in (c), the right tie rod 29 pulls the right front wheel 14R and the left tie rod 29 pushes the left front wheel 14L.

In (d), the right tie rod 29 pushes the right front wheel 14R and the left tie rod 29 pulls the left front wheel 14L.

Since the tie rods 29, 29 are mounted on the hub drums 24L, 24R spaced apart from the steering pins 20, 20 of the front wheels 14L, 14R by a pitch P, the hub drums 24L, 24R receive forces through the tie rods 29, 29 and hence, the front wheels 14L, 14R are rotated to the left side and the right side about the steering pins 20, 20.

As a result, by tilting the handle 16 without rotating the handle 16 in the left and right directions, it is possible to steer the front wheels 14L, 14R.

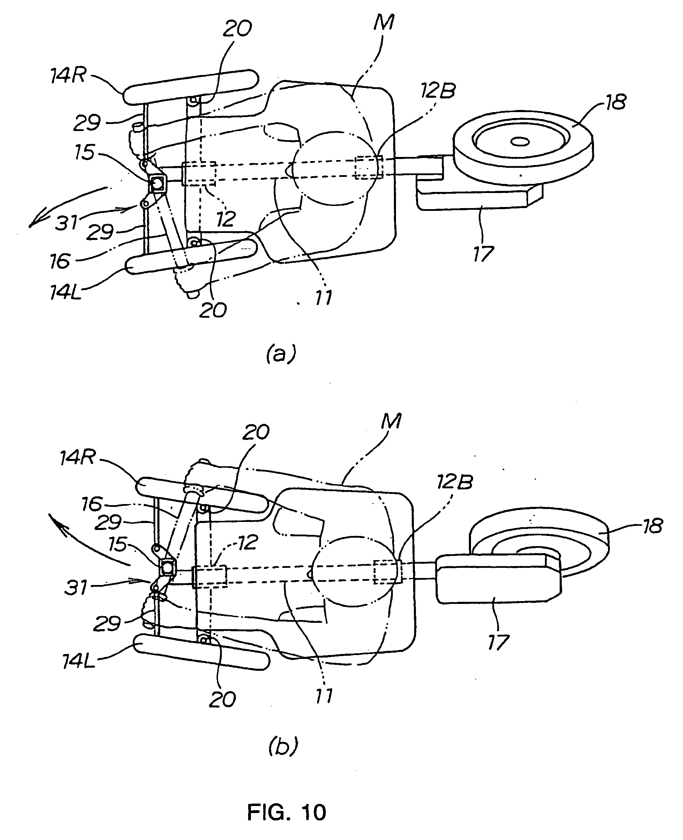

Fig. 10 is an operational view of the tiltable three-wheeled vehicle and shows a state in which the driver M turns the vehicle 10 by tilting the manipulating member 15 by way of the handle 16.

(a) shows a case when vehicle 10 is turned to the left side, wherein the driver M tilts the manipulating member 15 in the downward direction in the drawing thus applying forces to the front wheels 14L, 14R in the left side with respect to the steering pins 20 through the brackets 31 mounted on the manipulating member 15 and the tie rods 29, 29, whereby the front wheels 14L, 14R are steered to the left side about the steering pins 20 and, at the same time, the rear wheel 18 is tilted to the left side by way of the center frame 11.

In addition to the above, the steering can be performed even when the left-side steering angle is imparted to the handle 16 and hence, it is possible to impart the steering angle in an auxiliary manner whereby the turning performance can be increased and the turning radius can be decreased.

(b) shows a case when vehicle 10 is turned to the right side, wherein the driver M tilts the manipulating member 15 in the upward direction in the drawing thus applying forces to the front wheels 14L, 14R in the right side with respect to the steering pins 20 through the brackets 31 mounted on the manipulating member 15 and the tie rods 29, 29, whereby the front wheels 14L, 14R are steered to the right side about the steering pins 20 and, at the same time, the rear wheel 18 is tilted to the right side by way of the center frame 11.

In addition to the above, the steering can be performed even when the right-side steering angle is imparted to the handle 16 and hence, it is possible to impart the steering angle in an auxiliary manner whereby the turning performance can be increased and the turning radius can be decreased.

Further, the vehicle 10 is configured such that the tie rods 29, 29 are extended toward the left and right front wheels 14L, 14R from the manipulating member 15 and are connected to the left and right front wheels 14L, 14R and hence, when the manipulating member 15 is tilted to either one of the left side and the right side, the left and right front wheels 14L, 14R are steered.

The left and right front wheels 14L, 14R are configured to be steered and, at the same time, the rear wheel 18 can be tilted in the turning direction and hence, it is possible to direct all three wheels in the turning direction.

As a result, it is possible to further enhance the turning performance.

Returning to Fig. 3, the manipulating member 15 is fixed to the front portion of the center frame 11 and one rear wheel 18 is mounted on the rear portion of the center frame 11 by way of the power unit 17, the rear wheel 18 is tilted by an amount corresponding to the tilting of the manipulating member 15. Accordingly, when the manipulating member 15 is erected upright, the camber of one rear wheel 18 becomes zero. On the other hand, the cambers of the left and right front wheels 14L, 14R are held at zero and hence, it is possible to make the vehicle body self-standing even when the vehicle 10 is stopped in accordance with the driver's intension.

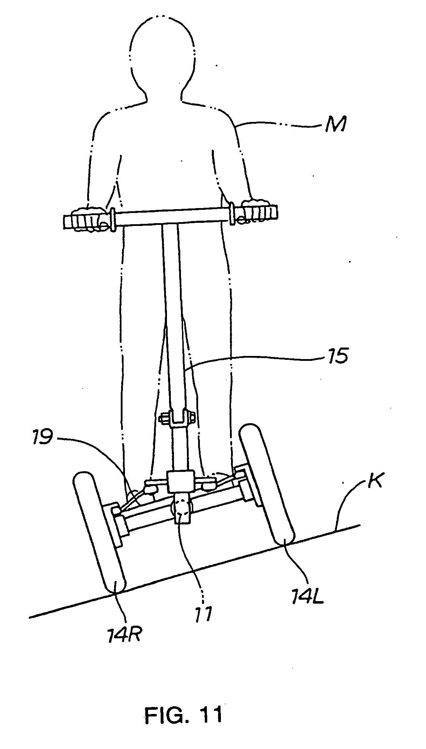

Fig. 11 is an operational view for explaining that the tiltable three-wheeled vehicle can achieve the self-standing posture on an inclined surface and shows that the driver M can allow the vehicle to assume the self-standing posture by tilting the manipulating member 15 in the perpendicular direction along which the gravity is applied so as to take the balance. On a surface K which is inclined in the lateral direction, portions other than the periphery of the front wheels 14L, 14R and the floor plate 19 are rotated about the center frame 11. Here, the cambers of the front wheels 14L, 14R and the floor plate 19 are set to zero.

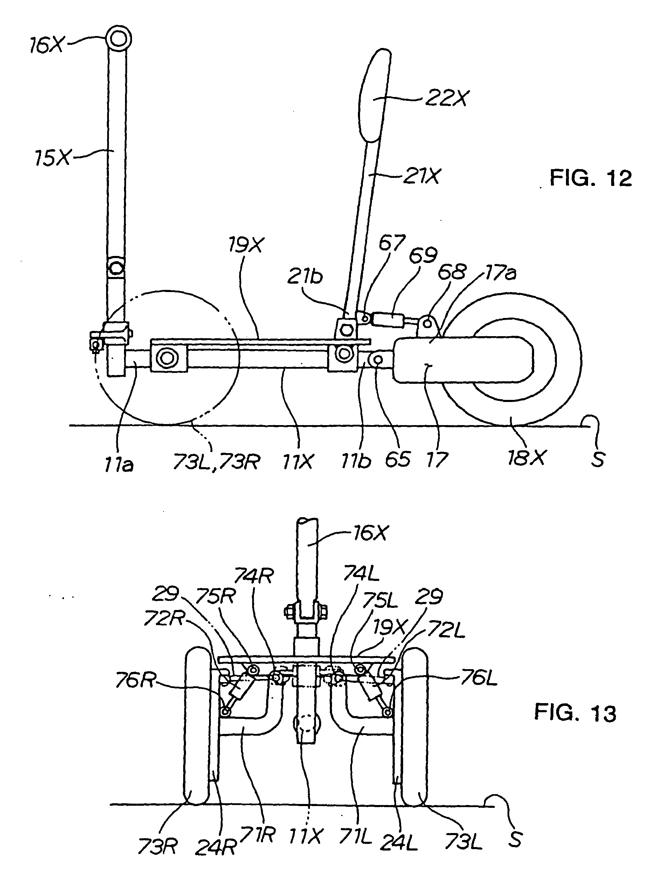

Fig. 12 is a view showing another embodiment of the tiltable three-wheeled vehicle shown in Fig. 2. The constitution which makes this embodiment different from the embodiment shown in Fig. 2 lies in that a pivot shaft 65 is provided in the vicinity of the rear end 11b of the center frame 11 and the power unit 17 is arranged in a rotatable manner about the pivot shaft 65 and, at the same time, a rear cushion 69 is interposed between the lower end portion 21b of the support bar and an upper portion 17a of the power unit 17. Here, the rear cushion 69 and the lower end portion 21b are rotatably mounted by a fastening shaft 67, while the rear cushion 69 and the upper portion 17a are rotatably mounted by a fastening shaft 68.

Since the pivot shaft 65 and the rear cushion 69 are interposed between the rear wheel 18X and the floor plate 19X, there is no possibility that the unevenness of a traveling surface S is directly transmitted to the floor plate 19X whereby the driving comfortableness can be enhanced.

Fig. 13 is a view showing another embodiment of the tiltable three-wheeled vehicle shown in Fig. 3. The constitution which makes this embodiment different from the embodiment shown in Fig. 3 lies in that swing arms 71L, 71R and left and right front cushions 72L, 72R are interposed between the left and right hub drums 24L, 24R and the floor plate 19X.

Here, symbols 74L, 74R indicate fastening shafts which rotatably support the swing arms 71L, 71R and the floor plate 19X, symbols 75L, 76L indicate fastening shafts which fasten the front cushions 72L, and symbols 75R, 76R indicate fastening shafts which fasten the front cushion 72R.

By setting the height of the fastening shafts 74L, 74R with respect to the traveling surface S substantially equal to the height of the tie rods 29, 29, it is possible to make the steering angle stable with respective to the vertical movement of the front wheels 73L, 73R.

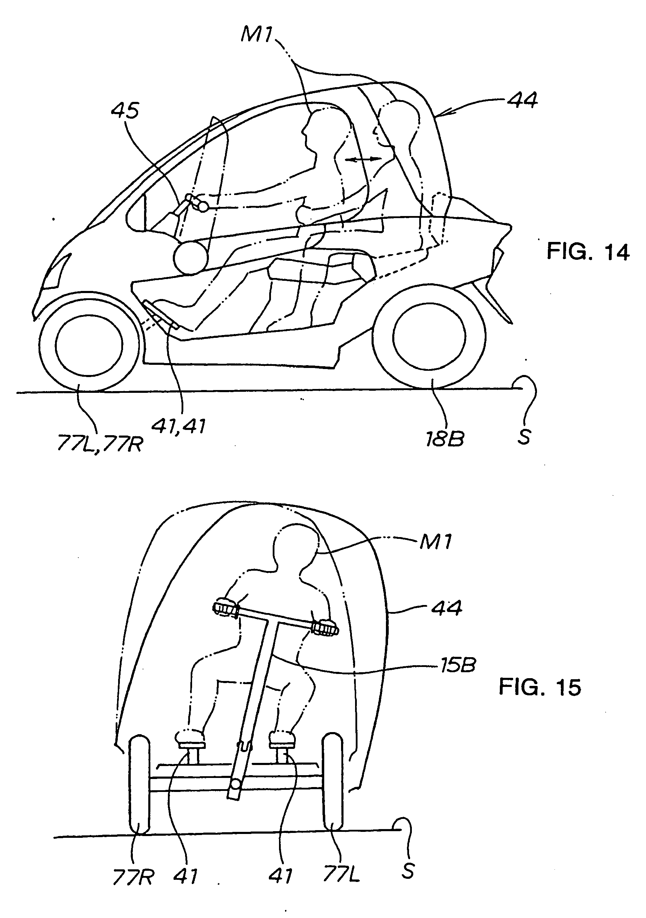

Fig. 14 is a view showing another example of a tiltable three-wheeled vehicle and is characterized by forming the tiltable three-wheeled vehicle into an all-weather vehicle.

The tilting manipulation of the manipulating members not shown in the drawing is performed such that bank control pedals 41, 41 which are respectively formed corresponding to a right leg and a left leg are used, and by adjusting step-in amounts of the pedals 41, 41, the cambers of the front wheels are maintained in accordance with the driver's intension so as to make the vehicle self-standing thus obtaining the favorable turning performance with the weight shift or the handle manipulation. Numeral 44 indicates a vehicle body.

Fig. 15 is an operational view for explaining a mode in which the vehicle body is tilted by the bank control of the vehicle body.

Power assist means such as a hydraulic or electrically-operated motor is moved based on the step-in amounts of the pedals 41, 41 and a force applied to a manipulating member 15B is adjusted by the power assist means whereby the self-standing and the turning operation can be performed. Here, in performing the turning operation, it is possible to set the camber of the front wheels with respect to a ground to zero using sensors.

## Claims

1. A tiltable three-wheeled vehicle including left and right front wheels (14L, R) and one rear wheel (18), and further including a tilting mechanism between the rear wheel (18) and the front wheels (14L, R), wherein on a center frame (11) which extends in the fore-and-aft direction of the vehicle, a rotary member (12) is mounted in a state that the rotary member (12) is rotatable about an axis of the center frame (11), a floor plate (19) which allows the riding of a rider thereon and a cross shaft (13) which crosses the center frame (11) at a right angle are fixed to the rotary member (12), the left and right front wheels (14L, R) are mounted on left and right ends (13a, b) of the cross shaft (13), one rear wheel (18) is mounted on a rear portion (11 b) of the center frame (11) by way of a power unit (17), a manipulating member (15) which the rider manipulates is erected on a front portion (11 a) of the center frame (11), the front wheels (14R, L) maintain a zero camber, and the center frame (11) and the rear wheel (18) constitute a tiltable portion with respect to the front wheels (14R, L) and the floor plate (19) by way of the rotary member,
**characterized in that** left and right portions of the cross shaft (13) extend from the rotary member (12) to the left and right ends (13a, b), and **in that** the_rotary member (12) comprises a tubular portion, within which the center frame (11) is coaxially and horizontally mounted in a rotatable fashion.

2. A tiltable three-wheeled vehicle according to claim 1,
wherein the left and right front wheels (14L, R) are steerably mounted on the cross shaft (13), tie rods (29) extend in the left-and-right direction from a front portion of the center frame (11) or a lower portion of the manipulating member (15), and the tie rods (29) are connected with the left and right front wheels (14R, L), whereby two front wheels (14L, R) are configured to be steered when the manipulating member (15) is inclined to the left or to the right.

3. A tiltable three-wheeled vehicle according to any one of claims 1 or 2,
wherein the center frame (11) is tubular.

4. A tiltable three-wheeled vehicle according to any one of claims 1 to 3,
wherein left and right cross shafts (13) are fixed to left and right portions of the rotary member (12).

5. A tiltable three-wheeled vehicle according to any one of claims 1 to 4,
wherein the cross shafts (13) have a pipe structure.

6. A tiltable three-wheeled vehicle according to any one of claims 1 to 5,
wherein a back rest (22) for supporting a rider is provided so that it maintains a zero camber during turning.

## Patentansprüche

1. Neigbares Dreiradfahrzeug, das linke und rechte Vorderräder (14L, R) und ein Hinterrad (18) enthält, und das ferner einen Neigemechanismus zwischen dem Hinterrad (18) und den Vorderrädern (14L, R) enthält, worin
an einem Mittelrahmen (11), der sich in der Längsrichtung des Fahrzeugs erstreckt, ein Drehelement (12) in einem Zustand angebracht ist, in dem das Drehelement (12) um eine Achse des Mittelrahmens (11) herum drehbar ist, wobei eine Bodenplatte (19), die die Fahrt eines Fahrers darauf erlaubt, und eine Querstange (13), die den Mittelrahmen (11) rechtwinklig kreuzt, an dem Drehelement (12) befestigt sind, wobei die linken und rechten Vorderräder (14L, R) an linken und rechten Enden (13a, b) der Querstange (13) angebracht sind, wobei das eine Hinterrad (18) an einem hinteren Abschnitt (11 b) des Mittelrahmens (11) über eine Antriebseinheit (17) angebracht ist, wobei ein Handhabungselement (15), das der Fahrer handhabt, von einem vorderen Abschnitt (11a) des Mittelrahmens (11) hochsteht, wobei die Vorderräder (14R, L) einen Null-Sturz beibehalten, und wobei der Mittelrahmen (11) und das Hinterrad (18) in Bezug auf die Vorderräder (14R, L) und die Bodenplatte (19) über das Drehelement einen neigbaren Abschnitt darstellen,
**dadurch gekennzeichnet, dass** sich linke und rechte Abschnitte der Querstange (13) von dem Drehelement (12) zu den linken und rechten Enden (13a, b) erstrecken, und dass das Drehelement (12) einen rohrförmigen Abschnitt aufweist, in dem der Mittelrahmen (11) koaxial und horizontal drehbar gelagert ist.

2. Neigbares Dreiradfahrzeug nach Anspruch 1, worin die linken und rechten Vorderräder (14L, R) an der Querstange (13) lenkbar gelagert sind, wobei sich Spurstangen (29) von einem vorderen Abschnitt des Mittelrahmens (11) oder einem unteren Abschnitt des Handhabungselements (15) in der Links-/Rechtsrichtung erstrecken, und wobei die Spurstangen (29) mit den linken und rechten Vorderrädern (14R, L) verbunden sind, wobei die zwei Vorderräder (14R, L) so konfiguriert sind, dass sie lenkbar sind, wenn das Handhabungselement (15) nach links oder rechts geneigt wird.

3. Neigbares Dreiradfahrzeug nach einem der Ansprüche 1 oder 2, worin der Mittelrahmen (11) rohrförmig ist.

4. Neigbares Dreiradfahrzeug nach einem der Ansprüche 1 bis 3, worin linke und rechte Querstangen (13) an linken und rechten Abschnitten des Drehelements (12) befestigt sind.

5. Neigbares Dreiradfahrzeug nach einem der Ansprüche 1 bis 4, worin die Querstangen (13) eine Rohrstruktur haben.

6. Neigbares Dreiradfahrzeug nach einem der Ansprüche 1 bis 5, worin eine Rückenlehne (22) zum Stützen eines Fahrers so vorgesehen ist, dass sie während der Kurvenfahrt einen Null-Sturz beibehält.

## Revendications

1. Véhicule inclinable à trois roues comprenant des roues avant gauche et droite (14L, R) et une roue arrière (18), et comprenant en outre un mécanisme d'inclinaison entre la roue arrière (18) et les roues avant (14L, R), dans lequel
sur un châssis central (11) qui s'étend dans la direction longitudinale du véhicule, un élément rotatif (12) est monté dans un état dans lequel l'élément rotatif (12) peut tourner autour d'un axe du châssis central (11), une plaque de plancher (19) qui permet à un conducteur de se tenir dessus et un arbre transversal (13) qui traverse le châssis central (11) à un angle droit sont fixés sur l'élément rotatif (12), les roues avant gauche et droite (14L, R) sont montées sur des extrémités gauche et droite (13a, b) de l'arbre transversal (13), une roue arrière (18) est montée sur une partie arrière (11b) du châssis central (11) à l'aide d'une unité d'alimentation (17), un élément de manipulation (15) que le conducteur manipule est dressé sur une partie avant (11a) du châssis central (11), les roues avant (14R, L) maintiennent une cambrure nulle, et le châssis central (11) et la roue avant (18) constituent une partie inclinable par rapport aux roues avant (14R, L) et à la plaque de plancher (19) à l'aide de l'élément rotatif,
**caractérisé en ce que** les parties gauche et droite de l'arbre transversal (13) s'étendent de l'élément rotatif (12) vers les extrémités gauche et droite (13a, b), et **en ce que** l'élément rotatif (12) comprend une partie tubulaire, dans laquelle le châssis central (11) est monté coaxialement et horizontalement de manière rotative.

2. Véhicule inclinable à trois roues selon la revendication 1,
dans lequel les roues avant gauche et droite (14L, R) sont montées de manière orientable sur l'arbre transversal (13), des biellettes de direction (29) s'étendent vers la gauche et vers la droite depuis une partie avant du châssis central (11) ou une partie inférieure de l'élément de manipulation (15), et les biellettes de direction (29) sont reliées aux roues avant gauche et droite (14R, L), de sorte que deux roues avant (14L, R) sont configurées afin d'être orientées lorsque l'élément de manipulation (15) est incliné vers la gauche ou vers la droite.

3. Véhicule inclinable à trois roues selon l'une quelconque des revendications 1 ou 2, dans lequel le châssis central (11) est tubulaire.

4. Véhicule inclinable à trois roues selon l'une quelconque des revendications 1 à 3, dans lequel des arbres transversaux gauche et droit (13) sont fixés sur des parties gauche et droite de l'élément rotatif (12).

5. Véhicule inclinable à trois roues selon l'une quelconque des revendications 1 à 4, dans lequel les marbres transversaux (13) possèdent une structure de tube.

6. Véhicule inclinable à trois roues selon l'une quelconque des revendications 1 à 5, dans lequel un dossier (22) destiné à soutenir un conducteur est prévu afin de maintenir une cambrure nulle dans les virages.
